## Europäisches Patentamt

## European Patent Office

## Office européen des brevets

(19)

(11) Veröffentlichungsnummer: **0 159 330**

**B1**

(12)

# EUROPÄISCHE PATENTSCHRIFT

(45) Veröffentlichungstag der Patentschrift:
**13.01.88**

(21) Anmeldenummer: **84903538.1**

(22) Anmeldetag: **31.08.84**

(86) Internationale Anmeldenummer:
**PCT/EP 84/00263**

(87) Internationale Veröffentlichungsnummer:
**WO 85/01167 (14.03.85 Gazette 85/07)**

(51) Int. Cl.⁴: **H 04 B 1/20, H 01 R 31/02**

(54) **ANSCHLUSSEINHEIT ZUM ZUSAMMENSCHALTEN MITEINANDER KORRESPONDIERENDER ELEKTRISCHER GERÄTE.**

(30) Priorität: **01.09.83 DE 3331616**

(43) Veröffentlichungstag der Anmeldung:
**30.10.85 Patentblatt 85/44**

(45) Bekanntmachung des Hinweises auf die Patenterteilung:
**13.01.88 Patentblatt 88/2**

(84) Benannte Vertragsstaaten:
**AT BE CH DE FR GB LI LU NL SE**

(56) Entgegenhaltungen:
**DE-A-2 415 727**
**DE-A-2 600 795**
**DE-A-3 139 071**
**DE-C-477 687**
**FR-A-1 507 688**
**FR-A-2 168 055**
**GB-A-2 014 367**

**Funk-Technik 37, Heft 11, 1982, "Bussysteme in der Unterhaltungselektronik", Seiten 477-480**

(73) Patentinhaber: **WEVELSIEP, Wilhelm, St. Vither Strasse 7, D-5100 Aachen (DE)**

(72) Erfinder: **DATENE, Siegbert, Brückstrasse 30, D-5100 Aachen (DE)**

(74) Vertreter: **Bauer, Robert, Dipl.- Ing., Boeters, Bauer & Partner Patentanwälte Thomas-Wimmer- Ring 14, D-8000 München 22 (DE)**

EP 0 159 330 B1

### Beschreibung

Die Erfindung betrifft eine Anschlußeinheit gemäß Gattungsbegriff des Patentanspruchs 1.

Zunehmend finden handelsübliche Fernsehgeräte als Monitor für eine Vielzahl von Peripheriegeräten Verwendung, wie z. B. Videokameras, Videorekordern, Bildplattenspielern, Heimcomputern und Telespielen. Dabei ist es wunschenswert, ein jeweiliges Umstecken an der gewöhnlich rückseitigen und daher oft schwer zugänglichen, zumeist einzigen Verbindungsbuchse zu erübrigen. Zusätzlich besteht häufig das Bedürfnis, einzelne Peripheriegerate, wie etwa Bildplattenspieler und Videorekorder, untereinander zu verbinden.

Aus der Abhandlung "Bus-Systeme in der Unterhaltungselektronik" in "Funk-Technik" 37, 1982, Seiten 477 - 480, ist nun bereits eine Anschlußeinheit mit den Merkmalen des Gattungsbegriffes bekannt, bei der die einzelnen Funktionen mittels mikroprozessorgesteuerter elektronischer Schalter herbeigeführt werden. Eine solche Anschlußeinheit ist entsprechend aufwendig, zumal sie von vornherein sämtlichen denkbaren Gerätekombinationen Rechnung tragen sollte. Eine Untergliederung nämlich in voneinander trennbare Teile, wie etwa Module, würde, abgesehen davon, daß ein jeder dieser Module eigene elektronische Schaltmittel enthalten müßte, die Zuverlässigkeit in Frage stellen, da die miteinander zu verbindenden elektronischen Schaltmittel gegen Signalverluste oder -verstümmelungen ungleich empfindlicher sind als die miteinander zu verbindenden audiovisuellen Geräte selbst. Um auch noch den letzten Modul seitens des betreffenden gemeinsamen Mikroprozessors ansteuern zu können, müßten die Steckverbinder mindestens ebensoviele zusätzliche Steckkontakte aufweisen, wie zusätzliche Module auftreten. D.h. die Anzahl der aneinanderschließbaren Module wäre begrenzt.

Von daher liegt der Erfindung die Aufgabe zugrunde, eine Anschlußeinheit gemäß Gattungsbegriff einfacher und dabei in solcher Weise auszubilden, daß sie den jeweiligen Bedürfnissen durch Zukauf angepaßt werden kann bis zu einer praktisch beliebigen Anzahl miteinander kommunikationsfähiger Geräte.

Diese Aufgabe ist erfindungsgemäß durch die kennzeichnenden Merkmale des Anspruche 1 gelöst.

Die betreffende Anschlußeinheit ermöglicht es, durch Betätigung maximal ebensovieler Schalter eine beliebige Anzahl der angeschlossenen Geräte AV-mäßig miteinander zu verbinden. Dabei kann ein verhältnismäßig kleiner und entsprechend billiger Grundmodul durch Zusatzmodule für ein jedes zugekaufte Gerät ergänzt werden, ohne daß die Funktionsfähigkeit dabei in Frage gestellt ist.

Die Unteransprüche geben bevorzugte Ausgestaltungsmöglichkeiten der Erfindung an, wie sie genauer noch aus der nachfolgenden Beschreibung eines Ausführungsbeispiels anhand der Figuren hervorgehen.

Dabei zeigt

Fig. 1 eine perspektivische Ansicht eines Grundmoduls einer erfindungsgemäßen Ansclußeinheit,

Fig. 2 eine ebensolche Ansicht eines Zusatzmoduls,

Fig. 3, etwas verkleinert, eine perspektivische Ansicht einer Reihe von zum Teil bereits mit dem Grundmodul verbundener Zusatzmodule,

Fig. 4 ein Schaltbild des Grundmoduls und

Fig. 5 ein Schaltbild eines Zusatzmodule.

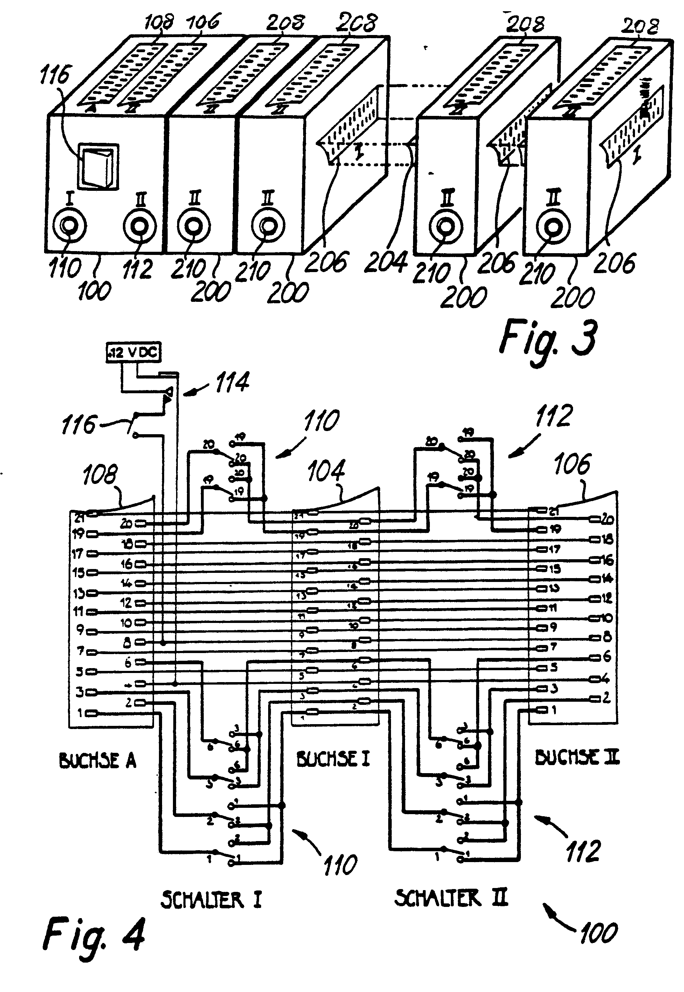

Die dargestellte Anschlußeinheit besteht aus einem Grundmodul 100 und einer beliebigen Anzahl aufeinanderfolgend zusteckbarer Zusatzmodule 200, die jeweils ein quaderförmige Gehäuse, 102 bzw. 202, aufweisen. Auf einander gegenüberliegenden Seiten seines Gehäuses trägt jeder Zusatzmodul 200 zum einen einen Vielfachstecker 204, zum anderen eine dazu passende Buchse 206, nachfolgend auch als Buchse I bezeichnet. Entsprechend weist auch der Grundmodul 100 an der entsprechenden Gehäuseseite eine Buchse 104 bzw. I auf. Über diese Stecker und Buchsen sind die einzelnen Module in der in Fig. 3 gezeigten Weise zu einer beliebig fortzusetzenden Reihe miteinander bundig zusammensteckbar.

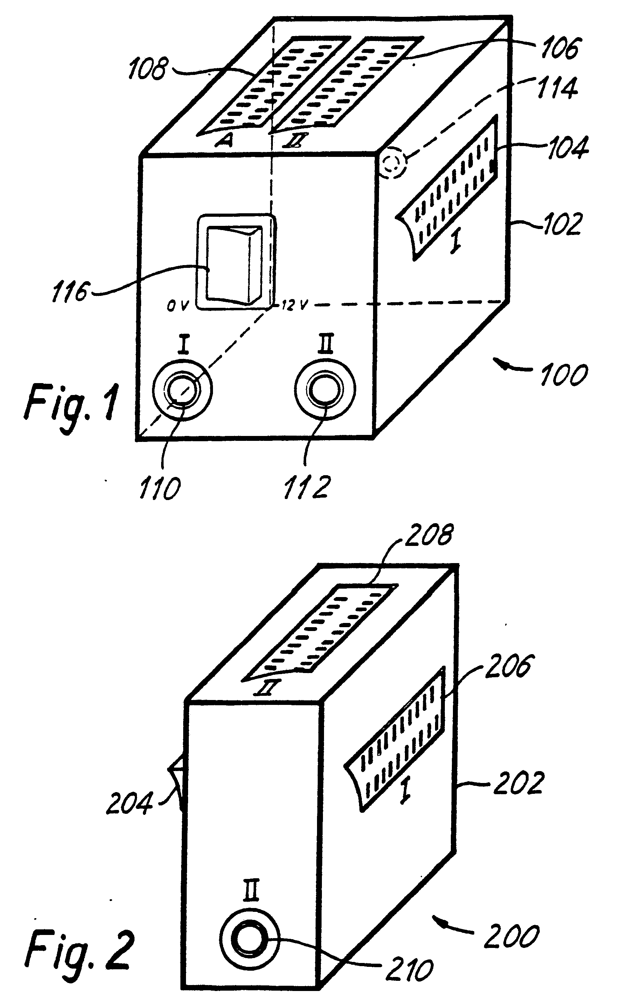

Darüber hinaus trägt jeder Modul, 100 wie 200, an seiner in den Figuren 1 bis 3 oben erscheinenden Stirnfläche eine Abzweigbuchse 106 bzw. 208, auch Buchse II genannt. Eine weitere Buchse, 108, auch Buchse A genannt, befindet sich auf der oberen Stirnfläche des Grundmoduls 100 neben Buchse 106. Sämtliche vorgenannten Stecker und Buchsen entsprechen der gleichen Norm (gezeigt ist die sog. "Scart"-Ausführung). Die Buchse A bildet den Anschluß für das Hauptgerät (Monitor), im allgemeinen ein Fernsehgerät oder auch einen Tonverstärker. An die Buchsen II ebenso wie an die Buchse I des in der Reihe letzten Moduls sind die Peripheriegeräte anschließbar.

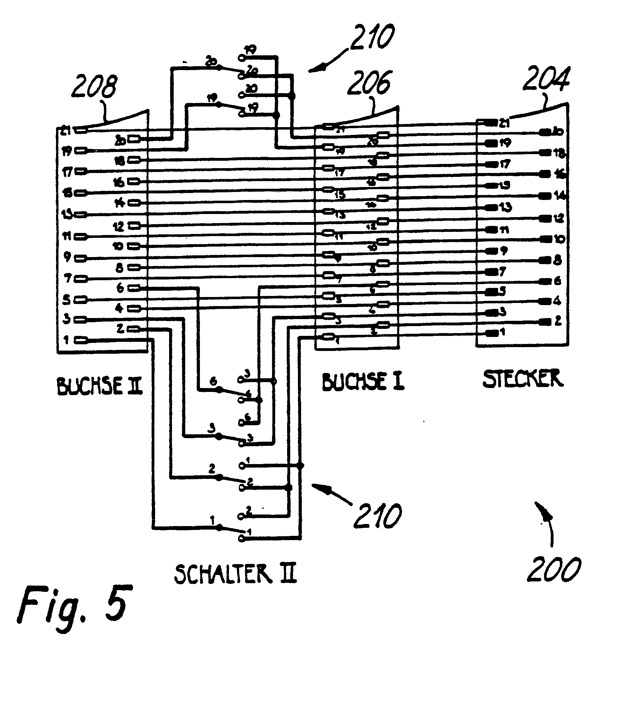

An ihrer dem Betrachter der Figuren 1 bis 3 zugewandten Stirnfläche tragen die Module Schalter, über welche bestimmte Kontakte der Buchsen I und II entweder direkt oder kreuzschaltungsmäßig miteinander verbunden werden können. Genauer gesagt trägt der Grundmodul 100 zwei Schalter 110 und 112, auch mit Schalter I bzw. II bezeichnet, während jeder der Zusatzmodule 200 einen Schalter 210 oder auch gleichfalls Schalter II genannt aufweist. Der Schalter I ist den Buchsen I sämtlicher Module, der Schalter II der Buchse II eines jeden Moduls zugeordnet, wie genauer aus den nachfolgend noch erörterten Schaltbildern der Figuren 4 und 5 hervorgeht. Mittels der Schalter I und II lassen sich die angeschlossenen Geräte zu- oder abschalten.

Über eine rückwärtige Buchse 114 des Grundmoduls 100 in Verbindung mit einem Schalter 116 läßt sich eine Schaltspannung von üblicherweise 12 V = (DC) einspeisen für den Fall, daß das als Steuergerät benutzte Gerät keine eigene Schaltspannungsquelle aufweist. Während in dem gezeigten Beispiel die Schalter I und II als Drucktastenschalter ausgebildet sind, besteht der Schalter 116 aus einem Wippschalter. Die Buchse 114 kann irgendeine geeignete zweipolige Buchse sein.

In Fig. 4 ist der Grundmodul 100, in Fig. 5 ein Zusatzmodul 200 schaltungsmäßig dargestellt. Die Zahlen 1 - 21 in Verbindung mit den einzelnen Steckkontakten entsprechen der üblichen Kontaktbezeichnung des "Scart -Systems. Wie ersichtlich sind die Kontakte 4, 5, 7 - 18 und 21 jeweils unmittelbar miteinander verbunden während die Kontakte 1 und 2, 3 und 6 sowie 19 und 20 der Buchsen A, I und II vermittels der Schalter I und II jeweils direkt oder aber kreuzweise miteinander zu verbinden sind. Sämtliche Kontakte des Steckers 204 sind mit denen der Buchse 1 des betreffenden Zusatzmoduls 200 jeweils unmittelbar verbunden, um eine bis zur Buchse 1 des letzten Moduls durchlaufende Hauptsignalleitung zu bilden, die über den Schalter I des Grundmoduls 100 schaltbar, d.h. bezuglich ihrer Signalflußrichtung umkehrbar ist, während die Schalter II die an die einzelnen Abzweigbuchsen II angeschlossenen Geräte zu- oder abzuschalten gestatten. Die über die Buchse 114 einzuspeisende Schaltspannung liegt im Bedarfsfall, bei geschlossenem Schalter 116, an sämtlichen der Kontakte 4 und 8 an.

Die vorausgehend beschriebene Anschlußeinheit ermöglicht damit ein dauerhaftes Miteinanderverbinden von 3 + M Einoder Zweiweggeräten, wenn M die Zahl der Zusatzmodule ist, wobei all diese Geräte untereinander ein-, aus- und umgeschaltet werden können. Damit ergibt sich die Möglichkeit des Vielfachkopierens. des Vielfach-Monitorbetriebes, des Kopierens mit gleichzeitiger Monitorkontrolle und ggf. Tonaufzeichnung, der Kameraüberwachung mit mehreren Kameras, ggf. mit gleichzeitiger Aufzeichnung, und dergl. mehr. Tritt ein neues Gerät hinzu, so muß dafür einfach ein Zusatzmodul 200 hinzugekauft werden.

## Patentansprüche

1. Anschlußeinheit zum wahlweisen AVmäßigen Zusammenschalten eines Monitore mit Peripheriegeräten der Unterhaltungselektronik, die einen über Schaltorgane mit einem vielpoligen Steckverbinder für ein jedes Peripheriegerät verbundenen Kreuzschienenverteiler aufweist, dadurch gekennzeichnet, daß die Schaltorgane manuell bedienbare mehrpolige mechanische Schalter (110, 112, 210) sind, von denen zwei (110, 112) mit den zugehörigen Steckverbindern (104, 106) in einem Grundmodul (100) und je ein weiterer (210) mit dem zugehörigen Steckverbinder (208) in einem Zusatzmodell (200) angeordnet sind, der über einen korrespondierenden Steckverbinder (204) entweder an einen (104) der beiden vorgenannten Steckverbinder des Grundmoduls (100) oder an einen entsprechenden Steckverbinder (206) eines vorausgehenden Zusatzmoduls (200) ansteckbar ist, welcher entsprechende Steckverbinder (206) in jedem Zusatzmodul (200) jeweils unmittelbar mit dem genannten korrespondierenden Steckverbinder (204) verbunden ist.

2. Anschlußeinheit nach Anspruch 1, dadurch gekennzeichnet, daß der Grundmodul (100) als weiteren mit dem Monitor zu verbindenden Steckverbinder (108) einen solchen gleicher Art wie die beiden vorgenannten Steckverbinder (104, 106) des Grundmoduls aufweist.

3. Anschlußeinheit nach Anspruch 1 oder 2, dadurch gekennzeichnet, daß die Module (100, 200) quaderförmig ausgebildet und miteinander fluchtend zusammensteckbar sind, wozu die miteinander korrespondierenden Steckverbinder (104; 204, 206) auf einer Seitenfläche bzw. auf einander gegenüberliegenden Seitenflächen des Grundmoduls (100) und der Zusatzmodule (200) angeordnet sind, während sich die übrigen Steckverbinder (106, 108; 208) und die Schalter (110, 112; 210) auf Stirnflächen der Module (100, 200) befinden.

4. Anschlußeinheit nach Anspruch 3, dadurch gekennzeichnet, daß sich die betreffenden übrigen Steckverbinder (106, 108; 208) einerseits und die Schalter (110, 112; 210) andererseits auf unterschiedlichen Stirnflächen der Module (100, 200) befinden.

5. Anschlußeinheit nach einem der vorhergehenden Ansprüche, dadurch gekennzeichnet, daß der Grundmodul (100) zusätzlich einen, vorzugsweise über einen weiteren Schalter (116) geführten Schaltspannungseingang (114) in Verbindung mit dem für die Schaltspannungsübertragung zuständigen Kontaktpaar (4, 8) der Steckverbinder (104 - 108, 204 - 208) aufweist.

## Claims

1. Connection unit for selective AV connection of a monitor to peripheral devices of entertainment electronics which comprise a cross-rail distributor connected via switching members to a four-pole connector for each peripheral device, characterized in that the switching members are manually operable muitipole mechanical switches (110, 112, 210) of which two (110, 112) are arranged with the associated connectors (104, 106) in a basic module (100) and each further switch (210) is arranged with the associated connector (208) in an auxiliary module (200) which can be connected via a corresponding connector (204) either to one (104) of the two aforementioned connectors of the basic module (100) or to a corresponding connector (206) of a preceding auxiliary module (200), said corresponding connector (206) in each auxiliary module (200) being connected in each case directly to said corresponding connector (204).

2. Connection unit according to claim 1, characterized in that the basic module (100) comprises as further connector (108) to be connected to the monitor a connector of the same type as the two aforementioned connectors (104, 106) of the basic module.

3. Connection unit according to claim 1 or 2, characterized in that the modules (100, 200) are made in parallelepipedic form and can be connected together in alignment, the connectors (104; 204, 206) corresponding to each other being arranged on a side face or on opposite side faces of the basic module (100) and of the auxiliary modules (200) whilst the remaining connectors (106, 108; 208) and the switches (110, 112; 210) are on end faces of the modules (100, 200).

4. Connection unit according to claim 3, characterized in that the respective remaining connectors (106, 108; 208) on the one hand and the switches (110, 112; 210) on the other hand are disposed on different end faces of the modules (100, 200).

5. Connection unit according to any one of the preceding claims, characterized in that the basic module (100) additionally comprises a switching voltage input (114) preferably led via a further switch (116) in connection with the contact pair (4, 8) of the connectors (104 - 108, 204 - 208) responsible for the switching voltage transmission.

## Claims

1. Unité de raccordement pour l'interconnexion audiovisuelle à volonté d'un moniteur et d'appareils périphériques de l'électronique de divertissement, comprenant un distributeur de voies croisées relié par des organes de commutation à un connecteur multipolaire de chaque appareil périphérique,

caractérisée en ce que les organes de commutation sont des commutateurs (110, 112, 210) mécaniques, multipolaires et à commande manuelle dont deux (110, 112) sont disposé, avec les connexions (104, 106) associées, dans un module de base (100) tandis qu'un autre commutateur (210), avec le connecteur (208) qui lui est associé, est disposé dans un module additionnel (200) qui peut être associé par enfichage au moyen d'un connecteur (204), soit à l'un (104) des deuxdits connecteurs du module de base (100), soit à um connecteur approprié (206) d'un module additionel (200) precedent, ledit connecteur approprié (206) de chaque module additionnel (200) étant raccordé directement audit connecteur correspondant (204).

2. Unité de connexion selon la revendication 1, caractérisée en ce que le module de base (100) présente eu outre, pour son raccordement au moniteur, un connecteur à enfichage (108) supplémentaire, du même type que les deuxdits connecteurs (104, 106) du module de base (100).

3. Unité de raccordement selon la revendication 1 ou 2, caractérisée en ce que les modules (100, 200) ont une forme parallélépipédique et peuvent être reliés en ligne par enfichage les connecteurs (104, 204, 206) étant à cet effet disposés sur une surface ou des surfaces latérales en regard du module de base (100) et des modules additionnels (200), tandis que les autres connecteurs (100, 108, 208) et les commutateurs (110, 112, 210) sont disposés sur des faces frontales des modules (100, 200).

4. Unité de raccordement selon la revendication 3, caractérisée en ce que les autres connnecteurs (106, 108, 208) d'une part et les commutateurs (110, 112, 210) d'autre part sont situés sur des faces frontales différentes des modules (100, 200).

5. Unité de raccordement selon l'une des revendications précédentes, caractérisée en ce que le module de base (100) posséde en outre une entrée de tension de commutation (114) passant de préférence par un commutateur supplémentaire (116), et associée au couple de contacts (4, 8) des connecteurs (104 - 108, 204 - 208) qui assurent la transmission de la tension de commutation.

**0 159 330**

*Fig. 1*

*Fig. 2*

Fig. 3

Fig. 4

0 159 330

Fig. 5

5